Europäisches Patentamt

European Patent Office

Office européen des brevets

(11) Veröffentlichungsnummer: **0 255 595 B1**

# EUROPÄISCHE PATENTSCHRIFT

(45) Veröffentlichungstag der Patentschrift: 27.12.91

(51) Int. Cl.⁵: **B29C 39/38**, B29C 39/40, B29C 39/42

(21) Anmeldenummer: 87108934.8

(22) Anmeldetag: 23.06.87

(54) Verfahren zur Herstellung von spannungsarmen Formteilen.

(30) Priorität: 04.07.86 DE 3622540

(43) Veröffentlichungstag der Anmeldung:
10.02.88 Patentblatt 88/06

(45) Bekanntmachung des Hinweises auf die
Patenterteilung:
27.12.91 Patentblatt 91/52

(84) Benannte Vertragsstaaten:
AT DE ES FR GB IT NL

(56) Entgegenhaltungen:
EP-A- 0 168 512
FR-A- 2 457 538
US-A- 4 227 673
US-A- 4 257 988

PATENT ABSTRACTS OF JAPAN, Band 8, Nr.
12 (M-269)[1449], 19. Januar 1984; & JP-A-58
173 625 (TOKYO SHIBAURA DENKI K.K.)
12-10-1983

PATENT ABSTRACTS OF JAPAN, Band 10,
Nr. 234 (M-507)[2290], 14. August 1986; &
JP-A-61 66 635 (MAZDA MOTOR CORP.)
05-04-1986

(73) Patentinhaber: BAYER AG

W-5090 Leverkusen 1 Bayerwerk(DE)

(72) Erfinder: Düllings, Josef, Dipl.-Ing.
Dorfstrasse 96
W-4174 Issum(DE)
Erfinder: Klöker, Werner, Prof, Dr.
Deswatinesstrasse 26
W-4150 Krefeld 1(DE)
Erfinder: Freitag, Dieter, Dr.
Hasenheide 10
W-4150 Krefeld 1(DE)
Erfinder: Lüsgen, Holger, Dipl.-Ing.
Schnitterter Weg 37
W-5650 Solingen 11(DE)
Erfinder: Schmid, Helmut, Dr.
Wedelstrasse 69
W-4150 Krefeld 1(DE)
Erfinder: Winchenbach, Helmut, Dipl.-Ing.
Eibenweg 11
W-4005 Meerbusch 2(DE)

PATENT ABSTRACTS OF JAPAN, Band 8, Nr. 12 (M-269)[1449], 19. Januar 1984; & JP-A-58 173 626 (TOKYO SHIBURA DENKI K.K.) 12-10.1983

PATENT ABSTRACTS OF JAPAN, Band 8, Nr. 28 (M-274)[1465], 7. Februar 1984; & JP-A-58 187 315 (OLYMPUS KOGAKU KOGYO K.K.) 01-11-1983

KUNSTSTOFFE, Band 63, Nr. 3, 1973, Seiten 181-184; H.J. BOOB et al.: "Volumenänderung bei der Vernetzung von ungesättigten Polyesterharzen"

## Beschreibung

Die Erfindung betrifft ein Verfahren zur Herstellung von spannungsarmen Formteilen, in dem reaktiv härtbare und/oder vernetzbare Massen mit einer Viskosität von weniger als 1000 mPas nach dem Einfüllen in eine Form durch Polymerisation in einen festen Zustand überführt werden.

Aus FR-A-2 457 538 ist ein gattungsgemäßes Verfahren zur Herstellung optisch auslesbarer Informationsscheiben bekannt. Das bekannte Verfahren ist dadurch gekennzeichnet, daß acrylathaltiger Lack mit einer Viskosität von 1000 bis 15.000 cP in den Hohlraum zwischen zwei parallelen Matrizen gegossen wird und mittels Strahlung gehärtet wird, wobei eine Matrize während der beim Härten auftretenden Schwindung des Lackes an der Oberfläche des Lackes haften bleibt und der Schwindung der Lackschicht folgt.

Aus EP-A1-0 168 512 ist ein Verfahren zur Entgasung von flüssigen Polyesterblends vor dem Gießen mittels Vibration und Scherung unter Vakuum bekannt.

Während der Polymerisation und/oder Polyaddition von Reaktionsharzen zu Duroplasten findet im allgemeinen eine Volumenminderung statt, die sich nachteilig auf die Formteilqualität auswirkt. Im Formteil treten Eigenspannungen auf, die im allgemeinen zu einer Minderung der mechanischen Festigkeit führen. Die Oberfläche weist sichtbar Einfallserscheinungen auf. Bei transparenten Werkstoffen ergeben sich infolge von Schlieren Verzerrungen der optischen Abbildungen. In besonders krassen Fällen werden Risse im Formteil beobachtet. Insbesondere sind als Folge des Volumenschrumpfens Relativbewegungen zwischen Formoberfläche und Formteiloberfläche (Ablösungen und/oder Querbewegungen) zu beobachten, die eine präzise Abbildung der Forminnenfläche auf das Formteil nicht zulassen.

Es ist bekannt, härtbare Monomere und/oder Reaktionsharze in eine Form einzubringen, die Härtungsreaktion einzuleiten und den Volumenschrumpf während der Härtung durch Zudosieren (Nachdrücken) von weiteren härtbaren Monomeren und/oder Oligomeren auszugleichen. Dieses Verfahren hat den Nachteil, daß während der Härtung Monomere und/oder Oligomere vom Anguß aus über längere Wege bis zum Ort des Volumenschrumpfes nachgedrückt werden müssen, und dabei Eigenspannungen und Inhomogenitäten im Formteil erzeugt werden. Das führt insbesondere bei transparenten Werkstoffen zu den genannten Nachteilen. In einer späten Härtungsphase ist wegen des Viskositätsanstieges ein Nachdrücken nicht mehr möglich, so daß Einfallstellen im Formteil auftreten.

Weiterhin ist bekannt (EP 0 142 367 A), eine planparallele Polymerschicht auf ein Substrat aufzubringen, wobei das Substrat zunächst in einer Form fixiert, in diese Form ein flüssiges Monomeres eindosiert und während oder vor der Härtung das Substrat von der Form gelöst wird, so daß das Substrat sich innerhalb der Form bewegen kann und so den Schrumpf während der Polymerisation ausgleichen kann. Z. B. ist diese Form mit einem demontierbaren Deckel ausgerüstet, der entfernt wird, bevor oder während das Teil schrumpft. Damit wird die Form belüftet und der Umgebungsdruck in dem Bereich der Form wirksam, der der beschichteten Substratseite abgewandt ist, bevor signifikanter Schrumpf auftritt. Damit kann sich das Substrat bewegen und den Schrumpf ausgleichen.

Nachteil des Verfahrens ist, daß Formteile nicht in einem Arbeitsgang hergestellt werden, sondern zur Herstellung von kompletten Formteilen mehrere Arbeitsgänge erforderlich sind. Das Verfahren setzt auch eine innige Verbindung von Substrat und Beschichtung voraus.

Schließlich ist ein Verfahren bekannt, bei dem spannungsfreie oder spannungsarme Formteile mit möglichst kleiner Reaktionsgeschwindigkeit bei möglichst niedriger Temperatur und möglichst kleiner Temperaturdifferenz ausgehärtet werden. Zur Herstellung ebener oder planparalleler, ebener Flächen wird dabei mit einer Nachdosierung des reaktiven Produktes unter Anwendung von Druck oder Nachdruck im Bereich 10 bis 50 bar gearbeitet.

Aufgabe der Erfindung ist es, ein Verfahren und eine Vorrichtung zur Herstellung eines irreversiblen bzw. reversiblen ausgehärteten, spannungsarmen Formteils aus reaktiv härtbaren Massen mit geringer Viskosität zu finden, welches trotz hoher Reaktionsgeschwindigkeiten und Temperaturen beim Aushärten Relativbewegung von Formteil und Formoberfläche zur Erzielung einer präzisen Wiedergabe der vorgegebenen Maße der Form vermeiden soll und welcher ein Formteil mit hervorragenden homogenen optischen Eigenschaften, erzeugt.

Die Aufgabe wird erfindungsgemäß dadurch gelöst, daß die Masse in einen homogenen, beruhigten Zustand gebracht wird, um dann in vorgegebenen Richtungen gehärtet zu werden, wobei mindestens eine der am Formteil anliegenden Innenflächen der geschlossenen Form entsprechend der Änderung der Abmessung während der Härtung in der jeweiligen Richtung nachgeführt wird.

Überraschenderweise wurde gefunden, daß auch bei wirtschaftlich günstiger Fahrweise - nämlich hohe Reaktionsgeschwindigkeiten und Temperaturen - abbildungsgetreue Formteile mit geringen Eigenspannungen und Schlierenfreiheit zu erzielen sind, wenn während der Härtung Änderungen (Schrumpfungen) der Masse durch entsprechendes Nachführen der Form sofort kompensiert werden. Hierdurch werden Relativbewegungen zwischen Form und Formteil vermieden. Es können also keine Scherkräfte auftreten, die beispielsweise zu Abrissen vorstehender Teile führen würden. Gleichzeitig können keine Einfallstellen entstehen, da zu jedem Zeitpunkt die Form vollständig gefüllt ist. Da die Härtung gerichtet ist, kann sie genau gesteuert werden. Die Härtungsfront durchläuft in Härtungsflächen, die eben sind oder nacheinander bestimmte Raumformen annehmen können, das Formteil, wodurch Eigenspannungen vermieden werden.

Andere Ausführungsformen sind in den Unteransprüchen angegeben.

Das Verfahren eignet sich besonders gut für dünne, flächige, transparente Formteile wie Scheiben, Linsen etc. Überraschenderweise hat sich nämlich gezeigt, daß, wenn die Härtung in Richtung der Dicke des Formteils vorgenommen wird, keine nennenswerten Schrumpfungen, insbesondere in der quer dazu liegende Richtung auftreten. An der Innenfläche der Form angebrachte Erhebungen oder Vertiefungen werden also formgetreu abgebildet. Hinzu kommt, daß die Scheibe wegen der schichtweisen Härtung nahezu spannungslos ist. Die Scheibe eignet sich deshalb besonders zur Widergabe von konturbedingten Informationen, die später beispielsweise durch Laserstrahl abgegriffen werden.

Bei dem Verfahren werden Massen mit einer Viskosität kleiner 10.000 mPas, insbesondere kleiner 1000 mPas eingesetzt. Diese können aus verschiedenen Komponenten mit evtl. Zusätzen bestehen. Vorher ist eine Entgasung möglich. Die Füllung sollte im Steigeverfahren erfolgen, wobei die Fließgeschwindigkeit in Abhängigkeit vom Füllgrad der Form so geregelt wird, daß zu jeder Zeit eine laminare Quellströmung vorhanden ist. Denkbar ist aber auch eine Homogenisierung des Geschwindigkeitsfeldes nach dem Füllen und vor dem Schließen der Form durch Vibration, wodurch insbesondere große Verzerrungen abgebaut werden können. Schließlich kann durch elektromagnetische, evtl. umpolbare, Felder die Bewegung der Dipole stark gedämpft werden.

Durch Strahlenbündel, insbesondere mit gerichteten Strahlen (UVA 340-420 nm), ist es möglich, gezielt in Richtung und Intensität die Härtung von außen schrittweise vorzunehmen, wobei der erste Schritt auch beispielsweise zur Beruhigung der Strömung innerhalb der Form eingesetzt werden kann.

Die durchstrahlte Formwand sollte die Wellen des Arbeitsbereiches weitgehend durchlassen, was beispielsweise bei Quarz, Silikaten und einigen amorphen Kunststoffen bei bestimmten Wellenlängen der Fall ist. Die Tiefe der Erwärmung kann durch Änderung der Wellenlänge bzw. Vorlage von Filtern eingestellt werden.

Es ist aber auch möglich, bei zwei gegenüberliegenden Formwänden ein Temperaturgefälle in einer Richtung aufzubauen, indem diese mit Kanälen ausgerüstet sind, die das Heiz- bzw. Kühlmedium aufnehmen.

Weiter ist eine Härtung durch Zugabe von Peroxid von innen nach außen bzw. umgekehrt je nach Wärmebeaufschlagung möglich.

Der gegenüber normalen Preßverfahren preiswertere geringe Druck stellt das einwandfreie Funktionieren der Form sicher, wobei er dem Reaktionsverlauf der Masse angepaßt werden sollte.

Die Nachführung der Formwand ist abhängig von dem Schwindungsverhalten des eingesetzten Werkstoffes. Sie sollte so eingestellt werden, daß zu keiner Zeit ein Zwischenraum vorhanden ist, um das Abfließen von Masse bzw. Einsenkungen zu vermeiden.

Das erfindungsgemäße Verfahren kann mit einer Vorrichtung, bestehend aus einem Formunterteil mit scheibenförmiger Ausnehmung zur Aufnahme der Matrize und einem Formoberteil, das über eine mittels Distanzhalter einstellbare Klemmvorrichtung gehalten ist und teilweise aus transparentem Material besteht, welches Strahlen - zumindest im Arbeitsbereich - ohne wesentliche Absorption durchläßt, durchgeführt werden, welche folgende charakteristischen Merkmale besitzt:

    1) die Ausnehmung besitzt entlang des kreisförmigen Randes eine elastische Dichtung,

    2) die Klemmvorrichtung ist in der Höhe zur Nachführung des Formoberteils nach Vorgabe einstellbar.

Weitere Merkmale der Erfindung sind in den Unteransprüchen dargestellt.

Als reaktive Verbindungen bzw. reaktive Komponenten von Gemischen können z.B. eingesetzt werden:

Ungesättigte Polyesterharze, gelöst in copolymerisierbaren Monomeren, vorzugsweise Styrol, Vinyltoluol, tert.-Butylstyrol, bis- und trifunktionellen Acrylaten, bevorzugt Methacrylaten von linearen und verzweigten Alkanolen ($C_1$ bis $C_{10}$), Cyclohexanol, Alkylcyclohexanolen und Phenolen, Cresolen, Bisphenolen, vorzugsweise Bisphenol A und F, sowie deren Reaktionsprodukte mit einem bis drei, vorzugsweise einem Mol Ethylenoxid und/oder Propylenoxyd je OH, ferner Glycerin und/oder Glycidylether der genannten Phenole und Bisphenole.

Aliphatische und/oder cycloaliphatische und/oder aromatische Epoxydharze (EP) und Isocyante.

Als Härter für EP-Systeme kommen in Betracht: aliphatische, cycloaliphatische und aromatische Amine sowie Säureanhydride, z.B. Tetrahydrophthalsäureanhydrid. Als Härter für Isocyanate: Aliphatische und/oder cycloaliphatische und/oder aromatische Polyole und/oder Amine und/oder Aminole.

Polymerisationsinitiatoren im Sinne dieser Erfindung sind:

für die Strahlenhärtung, vorzugsweise mit UV-Strahlen: z.B. Benzophenon, 1-Hydroxycyclohexylphenylketon, 2-Methyl-1-4-(methylthio)-phenyl-2-morpholinopropanon-1, Benzoin-Ether, vorzugsweise Benzoin-isopropyl- und -isobutyl-ether, Benzildiketale, vorzugsweise Benzildimethylketal, und gegebenenfalls Gemische der genannten Verbindungen und/oder deren Zubereitungen, z. B. in Weichmachern und/oder den verwendeten und/oder anderen Reaktionspartnern;

für die radikalische Härtung mit organischen Peroxiden oder Strahlungs-/Peroxid-Mischhärtungen: Diacylperoxide, Peroxydicarbonate, Perester, Perketale, Dialkylperoxide, Ketonperoxide, Hydroperoxide, z.B.: Bis-(2,4-dichlorbenzoyl)-peroxid, Dilauroylperoxid, Dibenzoylperoxid, Di-2-ethylhexylperoxydicarbonat, Diisopropylperoxy-dicarbonat, Dicyclohexyl-peroxydicarbonat, Bis-(4-t-Butylcyclohexyl)-peroxydicarbonat, t-Butyl-perpivalat, t-Butyl-per-2-ethylhexanoat, t-Butyl-per-3,5,5-trimethylhexanoat, t-Butyl-perbenzoat, t-Butylpermaleinat, 1,1-Bis(t-butylperoxy)3,3,5-trimethylcyclohexan, 1,1-Bis(t-butylperoxy)cyclohexan, 2,2-Bis-(t-butylperoxy)butan, n-Butyl-4,4-bis(t-butylperoxy)valerat, Ethyl-3,3-bis(t-butylperoxy)butyrat, Dicumylperoxid, t-Butylcumylperoxid, Bis(t-butylperoxy-isopropyl)-benzol, 2,5-dimethylhexan-2,5-di-t-butylperoxid, Di-t-butylperoxid, Methylisobutylketonperoxid, Methylethylketonperoxid, t-Butylhydroperoxid und gegebenenfalls Gemische der genannten Verbindungen und/oder deren Zubereitungen z.B. 40 - 60 Gew.-% in Weichmacher auf Basis Phthalate, Adiphate, Phosphate.

Beschleuniger im Sinne dieser Erfindung sind in den Reaktionsmassen lösliche anorganische, vorzugsweise organische Salze sowie Komplexverbindungen von Metallen, vorzugsweise von Cobalt und Vanadin, z.B. Cobalt-Octoat, -Naphthenat, -Acetylacetonat, Vanadylacetylacetonat, Vanadyloctonat, Vanadylacetat, Vanadyl-p-Toluolsulfonat. Ferner Amine, vorzugsweise tertiäre Alkylarylamine, z.B. N,N-Dimethylanilin.

N,N-Dimethylanilin, 10 %ig in Styrol, N,N-Diethylanilin, 10 %ig in Styrol, N,N-Dimethyl-p-toluidin, 10 %ig in Styrol, N,N-bis-($\beta$-hydroxyethyl)-p-toluidin, N,N-bis-($\beta$-hydroxypropyl)p-toluidin, N,N-bis-($\beta$-hydroxypropyl)-p-toluidin-adipat.

Zusatzbeschleuniger (Promotoren) im Sinne dieser Erfindung sind für Härtungen mit Beschleunigern auf Basis von Cobalt-Verbindungen die oben genannten Amine, vorzugsweise N,N-dimethylanilin, N,N-Diethylanilin, N,N-Dimethyl-p-Toluidin, N,N-bis-$\beta$-hydroxyethyl und/oder -propyl-p-Toluidin und/oder deren Ester, z.B. mit Adipinsäure, Phthalsäuren, Monocarbonsäuren ($C_2$-$C_{10}$).

Zusatzbeschleuniger für Vanadinverbindungen

sind: Thiole und Thiocarbonsäureester, vorzugsweise Thioglykolsäureester, wie z.B. in der deutschen Auslegeschrift 2 025 410 beschrieben.

Inhibitoren im Sinne dieser Erfindung sind: Benzochinon, Toluchinon, Naphthochinone, Trimethylchinon, Mono- und di-tertiär-Butylchinon und/oder Hydrochinone, vorzugsweise Hydrochinon, Toluhydrochinon, 1,4-Naphthohydrochinon, Brenzcatechine - vorzugsweise tert.-Butyl-Brenzcatechin - sowie deren Ester mit Monocarbonsäuren und/oder deren Mono-alkylether, ferner Chloranil und lösliche Kupfersalze und/oder -Komplexe, z.B. Kupfer-Naphthenat, -Octoat, -Acetylacetonat, Kupfer(I)chlorid-Trischlorethylphosphit-Komplex.

Ein Beispiel der Erfindungen ist in den Zeichnungen dargestellt und wird im Folgenden erläutert. Es zeigen

Fig. 1      Draufsicht auf Form

Fig. 2      Schnitt durch Form

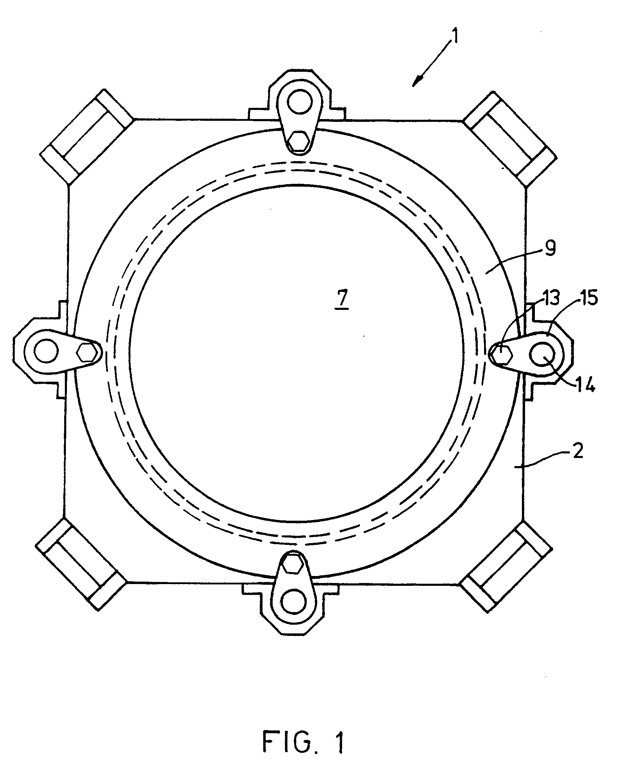

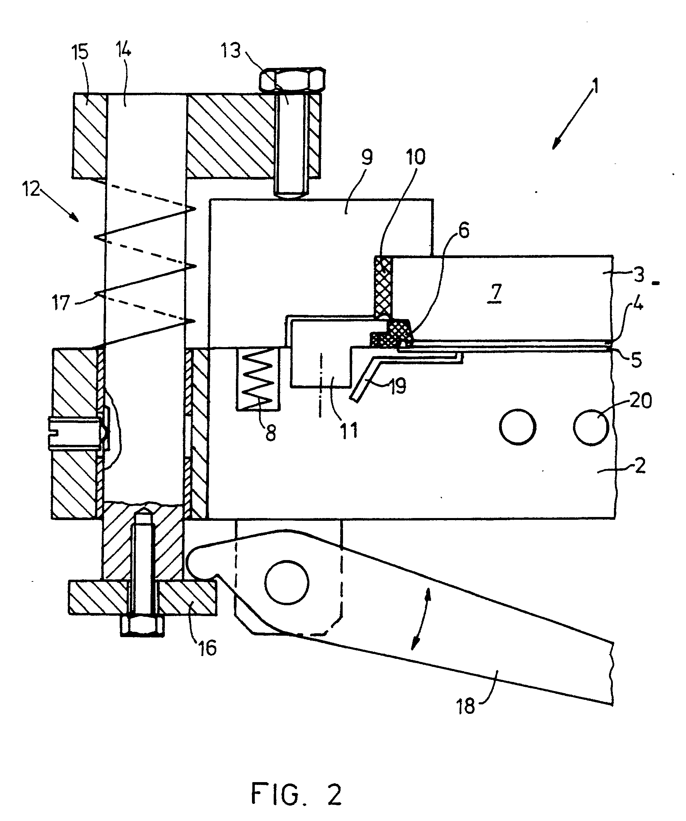

In Fig. 1 und Fig. 2 ist eine Form 1 dargestellt, die aus einem Formunterteil 2 und einem Formoberteil 3 besteht, zwischen denen das Formteil 4 hergestellt wird. Auf der Oberseite des plangeschliffenen Formunterteils 2 ist eine Matrize 5 mit Informationsvertiefungen angeordnet, die kreisförmig am Rand von einer elastischen Dichtung 6 gehalten wird. Das Formoberteil 3 besteht aus einer Glasscheibe 7, die über einen durch Federn 8 in der Höhe verstellbaren Ring 9 mit seitlicher Gummierung 10 gehalten wird, deren Beweglichkeit nach unten durch einzelne Paßstücke 11 und nach oben durch Klemmvorrichtung 12 über Justierschraube 13 vorgegeben wird. Die Klemmvorrichtung 12 besteht aus einer, am Formunterteil 2 geführten Säule 14 mit oberem Ausleger 15 und Kopf stück 16. Die Höhenverstellung erfolgt nach oben durch Zylinder-Feder 17 und nach unten über einen (hydraulisch) bewegbaren Hebel 18.

Im Formunterteil 2 sind noch Vakuum-Kanäle 19 bzw. Heizmedium-Kanäle 20 angeordnet.

## Patentansprüche

1. Verfahren zur Herstellung von spannungsarmen Formteilen, in dem reaktiv härtbare und/oder vernetzbare Massen mit einer Viskosität von weniger als 1000 mPas nach dem Einfüllen in eine Form durch Polymerisation in einen festen Zustand überführt werden, dadurch gekennzeichnet, daß die Masse in einen homogenen, beruhigten Zustand gebracht wird, um dann in vorgegebenen Richtungen gehärtet zu werden, wobei mindestens eine der am Formteil anliegenden Innenflächen der geschlossenen Form entsprechend der Änderung der Abmessung während der Härtung in der jeweiligen Richtung nachgeführt wird.

2. Verfahren nach Anspruch 1, dadurch gekennzeichnet, daß aus der Masse ein flächiges Gebilde, insbesondere eine planparallele Scheibe mit einer Dicke kleiner 4 mm, insbesondere kleiner 2 mm, geformt wird.

3. Verfahren nach Ansprüchen 1-2, dadurch gekennzeichnet, daß der homogene, beruhigte Zustand durch eine laminare Strömung - insbesondere mittels einer geschwindigkeitsgeregelten Zudosierung - erzielt wird.

4. Verfahren nach Ansprüchen 1-2, dadurch gekennzeichnet, daß der homogene, beruhigte Zustand duch kurzzeitige Vibration eingestellt wird.

5. Verfahren nach Ansprüchen 1-2, dadurch gekennzeichnet, daß die Masse durch Anlegen von elektrisch und/oder magnetischen Feldern beruhigt wird.

6. Verfahren nach Ansprüchen 1-2, dadurch gekennzeichnet, daß die Masse durch Erhöhung der Viskosität bis zu einer Größe von 10.000 mPas mit Hilfe einer kurzzeitigen Vorbestrahlung beruhigt wird.

7. Verfahren nach Ansprüchen 1-6, dadurch gekennzeichnet, daß als Richtung der Härtung ein Winkel von 70-90°, insbesondere 90°, zur Oberfläche gewählt wird.

8. Verfahren nach Ansprüchen 1-7, dadurch gekennzeichnet, daß die Härtungsgeschwindigkeiten so zueinander eingestellt werden, daß nur allmähliche, stetige Übergänge vorliegen.

9. Verfahren nach Ansprüchen 1-8, dadurch gekennzeichnet, daß die Richtung der Härtung durch senkrecht zur Oberfläche des Formteils eingetragene Strahlung, insbesondere UV-Strahlung, vorgenommen wird, die durch eine Formwand mit geringer Strahlungsabsorption zugeführt wird.

10. Vorrichtung zur Durchführung des Verfahrens gemäß Ansprüchen 1 bis 9, bestehend aus einem Formunterteil mit scheibenförmiger Ausnehmung zur Aufnahme der Matrize und einem Formoberteil, das über eine mittels Distanzhalter einstellbare Klemmvorrichtung gehalten ist und teilweise aus transparentem Material besteht, welches Strahlen - zumindest im Arbeitsbereich - ohne wesentliche Absorption durchläßt, dadurch gekennzeichnet, daß

1) die Ausnehmung entlang des kreisförmigen Randes eine elastische Dichtung (6) besitzt,
2) die Klemmvorrichtung (12) in der Höhe zur Nachführung des Formoberteils (3) nach Vorgabe einstellbar ist.

## Claims

1. A method of manufacturing stress-free mouldings in which material is converted into a solid state by polymerisation, the material being hardenable and/or crosslinkable by a reaction and having a viscosity of less than 1000 mPas after pouring into a mould, characterised in that the material is brought into a homogeneous, stabilised state so that it can then be hardened in preset directions, at least one surface of the closed mould adjacent the moulding being adjustable during hardening in the respective direction corresponding to the change in dimension.

2. A method according to claim 1, characterised in that the material is formed into a flat structure, more particularly a plane-parallel disc having a thickness less than 4 mm, more particularly less than 2 mm.

3. A method according to claims 1 - 2, characterised in that the homogeneous stabilised state is obtained by laminar flow, more particularly by speed-regulated metered addition.

4. A method according to claims 1 - 2, characterised in that the homogeneous stabilised state is adjusted by brief vibration.

5. A method according to claims 1 - 2, characterised in that the material is stabilised by application of electric and/or magnetic fields.

6. A method according to claims 1 - 2, characterised in that the material is stabilised by increasing the viscosity up to 10 000 mPas by means of brief preliminary radiation.

7. A method according to claims 1 - 6, characterised in that the chosen direction of hardening is an angle of 70 - 90°, more particularly 90°, to the surface.

8. A method according to claims 1 - 7, characterised in that the rates of hardening are adjusted to one another so that transitions are gradual and continuous.

9. A method according to claims 1 - 8, characterised in that the direction of hardening is brought about by radiation, more particularly UV radiation, introduced at right angles to the surface of the moulding and supplied through a wall of the mould which absorbs little radiation.

10. A device for working the method according to claims 1 - 9, comprising a bottom part of a mould having a disc-shaped recess for receiving the die and a top part of the mould which is held by a clamping device adjustable by a spacer and is partly made of transparent material which transmits radiation without substantial absorption, at least in the working area, characterised in that

    1) A resilient seal (6) is provided around the circular edge of the recess, and
    2) The clamping device (12) is vertically adjustable for automatic programmed guidance of the top part (3) of the mould.

**Revendications**

1. Procédé pour la fabrication de pièces moulées à faibles tensions, dans lequel des matières durcissables et/ou réticulables par réaction d'une viscosité de moins de 1 000 mPa.s sont transformées en un état solide par polymérisation après le chargement dans un moule, caractérisé en ce que la matière est mise dans un état stabilisé homogène pour être ensuite durcie dans des directions prédéterminées, l'une au moins des surfaces intérieures du moule fermé en contact avec la pièce moulée étant guidée ultérieurement dans chaque direction en fonction de la modification de la dimension pendant le durcissement.

2. Procédé selon la revendication 1, caractérisé en ce que l'on moule dans la matière une structure plane, en particulier un disque à faces parallèles d'une épaisseur inférieure à 4 mm, en particulier inférieure à 2 mm.

3. Procédé selon les revendications 1-2, caractérisé en ce que l'état stabilisé homogène est obtenu par un écoulement laminaire - en particulier au moyen d'un dosage régulé par la vitesse.

4. Procédé selon les revendications 1-2, caractérisé en ce que l'état stabilisé homogène est ajusté par application de vibrations de courte durée.

5. Procédé selon les revendications 1-2, caractérisé en ce que la matière est stabilisée par application de champs électriques et/ou magnétiques.

6. Procédé selon les revendications 1-2, caractérisé en ce que la matière est stabilisée par augmentation de la viscosité jusqu'à 10 000 mPa.s au moyen d'une irradiation préalable de courte durée.

7. Procédé selon les revendications 1-6, caractérisé en ce que l'on choisit comme direction du durcissement un angle de 70-90° par rapport à la surface, en particulier 90°.

8. Procédé selon les revendications 1-7, caractérisé en ce que les vitesses de durcissement sont ajustées entre elles de sorte qu'il n'y ait que des transitions continues progressives.

9. Procédé selon les revendications 1-8, caractérisé en ce que le durcissement dirigé est effectué par un rayonnement introduit perpendiculairement à la surface de la pièce moulée, en particulier un rayonnement UV, qui est envoyé à travers une paroi du moule de faible absorption du rayonnement.

10. Appareil pour la mise en oeuvre du procédé selon les revendications 1 à 9, consistant en une partie inférieure du moule en forme de disque pour le logement de la matrice et une partie supérieure du moule, qui est maintenue par un dispositif de serrage réglable au moyen d'éléments écarteurs et consiste partiellement en une matière transparente, qui laisse passer les rayonnements - au moins dans la zone de travail - sans absorption notable, caractérisé en ce que

    1) le creux possède un joint élastique (6) le long du bord circulaire,
    2) le dispositif de serrage (12) est réglable en hauteur pour le guidage ultérieur de la partie supérieure du moule (3) après présentation.

EP 0 255 595 B1

FIG. 1

FIG. 2